# EUROPÄISCHE PATENTSCHRIFT

(11) **EP 0 854 978 B1**
(45) Veröffentlichungstag und Bekanntmachung des Hinweises auf die Patenterteilung: **27.10.1999**
(21) Anmeldenummer: 96932589.3
(22) Anmeldetag: 24.09.1996
(51) Int. Cl.: F02M 31/08, F02M 25/022

(54) **STATIONÄRE BRENNKRAFTMASCHINE UND VERFAHREN ZU IHREM BETREIBEN**
STATIONARY INTERNAL COMBUSTION ENGINE AND PROCESS FOR OPERATING IT
MOTEUR A COMBUSTION INTERNE STATIONNAIRE ET PROCEDE DE FONCTIONNEMENT CORRESPONDANT

(30) Priorität: 13.10.1995 DE 19538067
(43) Veröffentlichungstag der Anmeldung: 29.07.1998
(73) Patentinhaber: EES Erdgas Energiesysteme GmbH, 45355 Essen (DE); Seccacier S.A., 75015 Paris (FR)
(72) Erfinder: FÖRSTER, Manfred, D-45135 Essen (DE)
(74) Vertreter: Rupprecht, Klaus, Dipl.-Ing.
(86) Internationale Anmeldenummer: EP9604154
(87) Internationale Veröffentlichungsnummer: WO9714884

(56) Entgegenhaltungen:
- EP-A- 0 177 484
- EP-A- 0 305 351
- DE-A- 4 231 681
- FR-A- 2 694 074
- GB-A- 2 112 517
- US-A- 4 452 180
- US-A- 4 989 781

## Beschreibung

Die Erfindung betrifft eine stationäre Brennkraftmaschine mit Abgaswärmenutzung, wobei der Brennkraftmaschine ein Hochtemperatur-Abgaswärmetauscher (HT-AWT) und ein Kondensations-Abgaswärmetauscher (K-AWT) nachgeschaltet sind, und wobei das Kondensat aus dem Kondensations-Abgaswärmetauscher (K-AWT) zur Befeuchtung der Verbrennungsluft benutzt wird.

Stationäre Brennkraftmaschinen, wie Motoren und Turbinen, kommen unter anderem auf dem Gebiet der Kraft-Wärme-Kopplung zur Anwendung. Die Erfindung ist insbesondere anwendbar auf Gasmotoren und Gasturbinen.
Aus der DE-A1-4231681 ist ein Verfahren zur Klimatisierung der Verbrennungsluft bzw. des Verbrennungsluft-Kraftstoffgemisches für Brennkraftmaschinen bekannt. In zwei hintereinander geschalteten Wärmetauschern findet ein Wärmetausch zwischen der Verbrennungsluft und dem Abgas statt. Dabei kondensiert die im Abgas enthaltene Feuchtigkeit. Das Kondensat wird zur Befeuchtung der Verbrennungsluft genutzt.
Auch aus der EP-A2-0305351 ist die Befeuchtung der Verbrennungsluft durch Kondensat aus dem Abgas bekannt. Bei beiden bekannten Verfahren ist die Nutzbarmachung der Wärme des Abgases durch die Wärmeaufnahmefähigkeit der Verbrennungsluft begrenzt.
Wie auf sämtlichen Gebieten des Energieverbrauchs, besteht auch hier die allgemeine Forderung nach möglichst wirtschaftlicher Energieumsetzung.

Dementsprechend liegt der Erfindung die Aufgabe zugrunde, den Wirkungsgrad beim Betreiben der stationären Brennkraftmaschine zu erhöhen.
Zur Lösung dieser Aufgabe ist die stationäre Brennkraftmaschine nach der Erfindung dadurch gekennzeichnet, daß der Hochtemperatur-Abgaswärmetauscher (HT-AWT) und der Kondensations-Abgaswärmetauscher (K-AWT) jeweils einen Wärmeträgermittel-Kreis enthalten, um dem Abgas Nutzwärme zu entnehmen, daß dem Kondensations-Abgaswärmetauscher (K-AWT) ein Kondensat-Verbrennungsluft-Abgaswärmetauscher (KV-AWT) nachgeschaltet ist und daß eine erste Kondensatleitung (11) zur Kondensatförderung vom K-AWT zum KV-AWT vorgesehen ist.
Nutzwärme wird dem System über den HT-AWT und den K-AWT entnommen. Der KV-AWT dient dazu, die Verbrennungsluft zu erwärmen und zu befeuchten. Dabei wird die Verdampfungswärme für die Befeuchtung nicht nur dem Kondensat, sondern auch dem Abgas entnommen. Im KV-AWT kommt es also zwischen der Verbrennungsluft und dem Abgas/Kondensat, sowohl zu einem Wärmeaustausch als auch zu einem Wasseraustausch, ohne daß die beiden gasförmigen Medien sich vermischen.
Die Befeuchtung kann bis zur Sättigung der Verbrennungsluft gehen, also bis zur maximalen Erhöhung der relativen Feuchte. Da gleichzeitig eine Erwärmung der Brennungsluft stattfindet, kommt es zu einer entsprechenden Steigerung der Wasserdampfaufnahmefähigkeit der Luft.
Die absolute Steigerung des Wassergehaltes der Verbrennungsluft führt dazu, daß die Verbrennung mit wesentlich höherer Verbrennungs-Enthalphie abläuft. Gleichzeitig ergibt sich eine wesentliche Taupunkterhöhung im Abgas.
Insgesamt läßt die Erfindung eine beträchtliche Wirkungsgradsteigerung zu. Daraus resultiert eine entsprechende Einsparung an Primärenergie.
Als zusätzlicher Vorteil ergibt sich, daß die Erfindung eine spezifische und absolute Verminderung der Schadstoffemissionen ermöglicht.
Dabei ist es besonders vorteilhaft, daß die erste Kondensatzleitung im oberen Bereich des KV-AWT mündet. Dies führt zu einer automatischen Reinigung der Wärmetauscherflächen. Au letzteren könne sich nämlich die vom Abgas mitgeführten Verunreinigungen, wie Staub- und Aschepartikel, absetzen.
In Weiterbildung der Erfindung ist eine zweite Kondensatleitung zur Kondensatförderung vom KV-AWT zum K-AWT vorgesehen ist. Auf diese Weise wird dafür gesorgt, daß im K-AWT immer eine ausreichende Menge an Kondensat mit entsprechend hoher Temperatur für die Erwärmung und Befeuchtung der Verbrennungsluft im KV-AWT zu Verfügung steht.

Dabei ist es besonders vorteilhaft, daß in der zweiten Kondensatleitung ein Kondensat-Sammelbehälter vorgesehen ist und daß die Kondensatförderung aus dem Sammelbehälter in den K-AWT in Abhängigkeit von einem dem K-AWT zugeordneten Kondensat-Füllstandssensor steuerbar ist. Der Gesamtkondensat-Umlauf wird also automatisiert und in Abhängigkeit von derjenigen Kondensatmenge gesteuert, die momentan im K-AWT vorhanden ist.

Vorteilhafterweise sind in der zweiten Kondensatleitung zwischen dem KV-AWT und dem Kondensat-Sammelbehälter Reinigungseinrichtungen vorgesehen, die dafür sorgen, daß sich das im Kreislauf geführte Kondensat nicht mit Schadstoffen anreichert. Die Reinigung kann so intensiv betrieben werden, daß die vorteilhafte Möglichkeit besteht, den Kondensat-Sammelbehälter mit einem Überlauf zu versehen, aus dem überschüssiges Kondensat in das Abwasser überfließen kann.

In Weiterbildung der Erfindung wird vorgeschlagen, daß von der ersten Kondensatleitung eine Zweigleitung abgeht, die zum K-AWT zurückführt und in dessen oberen Bereich mündet. Das auf diese Weise direkt rezirkulierte Kondensat dient dazu, auch im K-AWT die Wärmetauscherflächen von anhaftenden Asche- und Staubpartikeln zu reinigen.

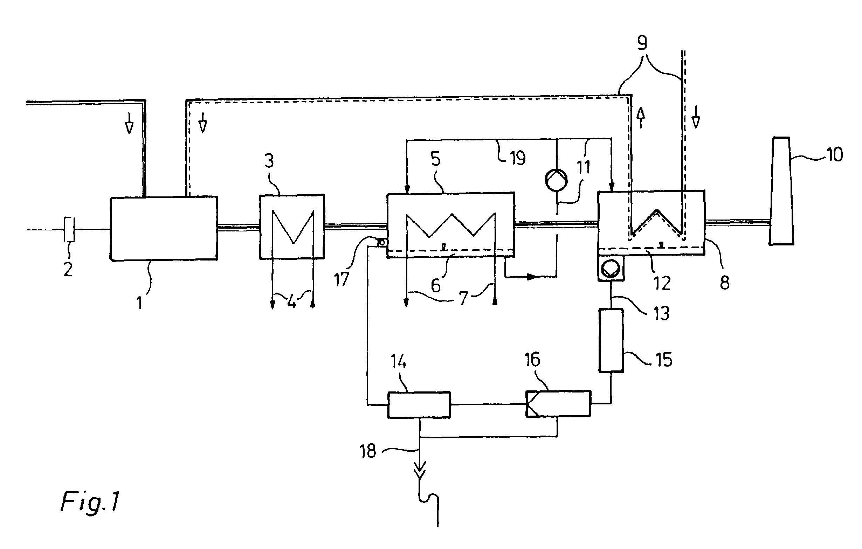

Die Erfindung wird im folgenden anhand eines bevorzugten Ausführungsbeispiels im Zusammenhang mit der beiliegenden Zeichnung näher erläutert. Die Zeichnung zeigt ein Fließschema einer erfindungsgemäßen Anlage.

Nach dem Ausführungsbeispiel ist eine Brennkraftmaschine 1 in Form eines Gasmotors oder einer Gasturbine vorgesehen. Die Brennkraftmaschine 1 ist über eine Kupplung 2 an ein nicht dargestelltes, angetriebenes Aggregat angeschlossen.

Das Abgas der Brennkraftmaschine 1 wird einem Hochtemperatur-Abgaswärmetauscher (HT-AWT) 3 zugeführt. Ein Wärmeträgermittel-Kreis 4 sorgt für die Nutzbarmachung der Wärme, die aem Abgas im HT-AWT 3 entnommen wird.

Das heruntergekühlte Abgas, dessen Temperatur jedoch immer noch oberhalb des Taupunktes liegt, gelangt sodann in einen Kondensations-Abgaswärmetauscher (K-AWT) 5, in welchem der Taupunkt unterschritten wird. Das entstehende Kondensat sammelt sich in einem Sumpf 6. Die Nutzwärme wird über einen Wärmeträgermittel-Kreis 7 abtransportiert. Im K-AWT 5 wird die latente Kondensationswärme des Abgases nutzbar gemacht.

Aus dem K-AWT 5 gelangt das Abgas in einen Kondensations-Verdampfungs-Abgaswärmetauscher (KV-AWT) 8. Hier findet ein Wärmeaustausch mit der Verbrennungsluft statt, die über eine Leitung 9 zugeführt, durch den KV-AWT 8 hindurchgeleitet und sodann an die Brennkraftmaschine 1 geliefert wird. Es kommt zu einer Vorwärmung der Verbrennungsluft.

Das stark heruntergekühlte Abgas gelangt schließlich in einen Kamin 10.

Im KV-AWT 8 findet nicht nur eine Erwärmung der Verbrennungsluft statt, sondern auch eine Befeuchtung bis zum Erreichen der Sättigung. Hierzu dient das im K-AWT 5 erzeugte Kondensat, das über eine erste Kondensatleitung 11 in den KV-AWT 8 gefördert wird. Das Kondensat trägt gleichzeitig zur Vorwärmung der Verbrennungsluft bei.

Da die Verbrennungsluft in KV-AWT 8 erwärmt wird, vermag sie bis zur Sättigung sehr viel Wasserdampf aufzunehmen. Der Verbrennungsvorgang läuft also bei hoher VerbrennungsluftEntalpie ab. Dementsprechend erhöht sich der Wirkungsgrad, was zu einer Einsparung an Primärenergie führt. Ferner verschiebt die rückgeführte Wassermenge den Taupunkt des Abgases auf eine höhere Temperatur, im vorliegenden Fall auf 72 °C. Schließlich ergibt sich eine spezifische und absolute Verminderung der Schadstoffemissionen.

Die erste Kondensatleitung 11 mündet im oberen Bereich des KV-AWT 8, so daß das Kondensat die Wärmeaustauschflächen überstreicht und von anhaftenden Asche- und Staubpartikeln reinigt. Es sammelt sich in einem Sumpf 12 und wird aus 5 diesem über eine zweite Kondensatleitung 13 einem Kondensat-Sammelbehälter 14 zugeführt. Diesem vorgeschaltet sind Reinigungseinrichtungen, nämlich eine Neutralisationsanlage 15 und ein Filter 16.

Der Sammelbehälter 14 ist wiederum an den K-AWT 5 angeschlossen, womit sich der Kondensat-Kreislauf schließt. Zur Steuerung der Kondensatrückführung dient ein Füllstandsensor 17. Auf diese Weise ist sichergestellt, daß im K-AWT 5 immer eine ausreichende Kondensatmenge entsprechender Temperatur für die Erwärmung und Befeuchtung der Verbrennungsluft zur Verfügung steht. Überschüssiges, gereinigtes Kondensat wird über einen Überlauf 18 aus dem Sammelbehälter 14 ins Abwasser abgegeben.

Von der ersten Kondensatleitung 11 geht eine Zweigleitung 19 ab, die direkt zurück in den oberen Bereich des K-AWT 5 führt. Das direkt rezirkulierte Kondensat überstreicht die Wärmetauscherflächen des K-AWT 5 und reinigt sie von anhaftenden Staub- und Aschepartikeln, die aus dem Abgas stammen.

Im Rahmen der Erfindung sind durchaus Abwandlungsmöglichkeiten gegeben. So besteht die Möglichkeit, das aus dem KV-AWT 8 stammende Kondensat über den Sammelbehälter 14 in den oberen Bereich des K-AWT 5 einzuleiten. Bei dem KV-AWT 8 handelt es sich um eine Bauart, die zwischen dem Abgas/Kondensat und der Verbrennungsluft den Austausch sowohl von Wärme als auch von Feuchtigkeit gestattet, ohne die beiden Gasströme miteinander zu vermischen. Alternativ dazu kann der KV-AWT auch in zwei Kolonnen aufgeteilt werden, wobei die eine Kolonne vom Abgas und die andere Kolonne von der Verbrennungsluft durchströmt wird, während zwischen den Kolonnen ein Kondensatkreislauf unterhalten wird.

## Patentansprüche

1. Stationäre Brennkraftmaschine mit Abgaswärmenutzung, wobei der Brennkraftmaschine (1) ein Hochtemperatur-Abgaswärmetauscher (HT-AWT) (3) und ein Kondensations-Abgaswärmetauscher (K-AWT) (5) nachgeschaltet sind und wobei das Kondensat aus dem K-AWT (5) zur Befeuchtung der Verbrennungsluft benutzt wird,
dadurch gekennzeichnet,
daß der HT-AWT (3) und der K-AWT jeweils einen Wärmeträgermittel-Kreis (4, 7) enthalten, um dem Abgas Nutzwärme zu entnehmen, daß dem K-AWT (5) ein Kondensat-Verbrennungsluft-Abgaswärmetauscher (KV-AWT) (8) nachgeschaltet ist und daß eine erste Kondensatleitung (11) zur Kondensatförderung vom K-AWT (5) zum KV-AWT (8) vorgesehen ist.

2. Brennkraftmaschine nach Anspruch 2, dadurch gekennzeichnet, daß die erste Kondensatleitung (11) im oberen Bereich des KV-AWT (8) mündet.

3. Brennkraftmaschine nach Anspruch 1 oder 2,
dadurch gekennzeichnet,
daß eine zweite Kondensatleitung (13) zur Kondensafförderumg vom KV-AWT (8) zum K-AWT (5) vorgesehen ist.

4. Brennkraftmaschine nach Anspruch 3,
dadurch gekennzeichnet,
daß in der zweiten Kondensatleitung (13) ein Kondensat-Sammelbehälter (14) vorgesehen ist und daß die Kondensatförderung aus dem Sammelbehälter (14) in den K-AWT (5) in Abhängigkeit von einem dem K-AWT zugeordneten Kondensat-Füllstandssensor (17) steuerbar ist.

5. Brennkraftmaschine nach Anspruch 4,
dadurch gekennzeichnet,
daß in der zweiten Kondensatleitung (13) zwischen dem KV-AWT (8) und dem Kondensat-Sammelbehälter (14) Reinigungseinrichtungen (15, 16) vorgesehen sind.

6. Brennkraftmaschine nach Anspruch 4 oder 5,
dadurch gekennzeichnet,
daß der Kondensat-Sammelbehälter (14) mit einem Überlauf (18) versehen ist.

7. Brennkraftmaschine nach einem der Ansprüche 1 bis 6,
dadurch gekennzeichnet,
daß von der ersten Kondensatleitung (11) eine Zweigleitung (19) abgeht, die zum K-AWT (5) zurückführt und in dessen oberen Bereich mündet.

## Claims

1. Stationary internal combustion machine with exhaust gas heat utilization in which a high temperature exhaust gas heat exchanger (HT-EHE) (3) and a condensing exhaust gas heat exchanger (C-EHE) (5) are fitted downstream of the internal combustion machine (1) and the condensate from the condensing exhaust gas heat exchanger (C-EHE) (5) is used to humidify the combustion air,
characterized in that the high temperature exhaust gas heat exchanger (HT-EHE) (3) and the condensing exhaust gas heat exchanger (C-EHE) each contain a heat carrier medium circuit (4, 7) in order to remove useful heat from the exhaust gas, in that a combustion air/condensate exhaust gas heat exchanger (CAC-EHE) (8) is fitted downstream of the condensing exhaust gas heat exchanger (C-EHE) (5) and in that a first condensate line (11) is provided for delivering condensate from the condensing exhaust gas heat exchanger (C-EHE) (5) to the combustion air/condensate exhaust gas heat exchanger (CAC-EHE) (8).

2. Internal combustion machine according to Claim 2 [sic], characterized in that the first condensate line (11) opens into the upper region of the combustion air/condensate exhaust gas heat exchanger (CAC-EHE) (8).

3. Internal combustion machine according to Claim 1 or 2, characterized in that a second condensate line (13) is provided for delivering condensate from the combustion air/condensate exhaust gas heat exchanger (CAC-EHE) (8) to the condensing exhaust gas heat exchanger (C-EHE) (5).

4. Internal combustion machine according to Claim 3, characterized in that a condensate collecting tank (14) is provided in the second condensate line (13) and in that the delivery of condensate from the collecting tank (14) to the condensing exhaust gas heat exchanger (C-EHE) (5) can be controlled as a function of a condensate level sensor (17) associated with the condensing exhaust gas heat exchanger (C-EHE).

5. Internal combustion machine according to Claim 4, characterized in that cleaning devices (15, 16) are provided in the second condensate line (13) between the combustion air/condensate exhaust gas heat exchanger (CAC-EHE) (8) and the condensate collecting tank (14).

6. Internal combustion machine according to Claim 4 or 5, characterized in that the condensate collecting tank (14) is provided with an overflow (18).

7. Internal combustion machine according to one of Claims 1 to 6, characterized in that a branch line (19), which leads back to the condensing exhaust gas heat exchanger (C-EHE) (5) and opens into its upper region, leads off from the first condensate line (11).

## Revendications

1. Moteur à combustion interne stationnaire avec utilisation de la chaleur des gaz d'échappement, le moteur à combustion interne (1) étant suivi d'un échangeur de chaleur de gaz d'échappement à haute température (ECGE-HT) (3) et d'un échangeur de chaleur de gaz d'échappement à condensation (ECGE-C) (5), et le condensat provenant du (ECGE-C) (5) étant utilisé pour humidifier l'air de combustion, **caractérisé** par le fait que le ECGE-HT (3) et le ECGE-C (5) comprennent respectivement un circuit de fluide caloporteur (4, 7) pour prélever la chaleur utile aux gaz d'échappement, que le ECGE-C (5) est suivi d'un échangeur de chaleur de gaz d'échappement-condensat-air de combustion (ECGE-CAC) (8) et qu'il est prévu une première conduite de condensat (11) pour envoyer le condensat du ECGE-C (5) au ECGE-CAC (8).

2. Moteur à combustion interne suivant la revendication 2, **caractérisé** par le fait que la première conduite de condensat (11) débouche dans la zone supérieure du ECGE-CAC (8).

3. Moteur à combustion interne suivant la revendication 1 ou 2, **caractérisé** par le fait qu'il est prévu une deuxième conduite de condensat (13) pour envoyer le condensat du ECGE-CAC (8) au ECGE-C (5).

4. Moteur à combustion interne suivant la revendication 3, **caractérisé** par le fait que la deuxième conduite de condensat (13) renferme un réservoir-collecteur de condensat (14) et que l'envoi du condensat du réservoir-collecteur de condensat (14) dans le ECGE-C (5) peut être commandé en fonction d'un détecteur de niveau de remplissage de condensat (17) associé au ECGE-C.

5. Moteur à combustion interne suivant la revendication 4, **caractérisé** par le fait que des dispositifs d'épuration (15, 16) sont prévus dans la deuxième conduite de condensat (13) entre le ECGE-CAC (8) et le réservoir-collecteur de condensat (14).

6. Moteur à combustion interne suivant la revendication 4 ou 5, **caractérisé** par le fait que le réservoir-collecteur de condensat (14) est muni d'un trop-plein (18).

7. Moteur à combustion interne suivant l'une des revendications 1 à 6, **caractérisé** par le fait qu'une conduite de dérivation (19) partant de la première conduite de consensat (11) ramène au ECGE-C (5) et débouche dans la zone supérieure de ce dernier.
